# EUROPEAN PATENT APPLICATION

(11) **EP 4 601 300 A1**
(43) Date of publication of application: **13.08.2025**
(21) Application number: 24765927.9
(22) Date of filing: 10.09.2024
(51) Int. Cl.: H04N 21/43, H04N 21/436, H04N 21/4363, H04N 21/439

(54) **METHOD OF SYNCHRONIZING AUDIO AND VIDEO AND ELECTRONIC DEVICE**

(30) Priority: 19.12.2023 KR 20230186405
(71) Applicant: Samsung Electronics Co., Ltd, Suwon-si, Gyeonggi-do 16677 (KR)
(72) Inventor: KIM, Namhyun, Suwon-si, Gyeonggi-do 16677 (KR); JANG, Duhe, Suwon-si, Gyeonggi-do 16677 (KR)
(74) Representative: Appleyard Lees IP LLP
(86) International application number: PCT/KR2024/013708
(87) International publication number: WO 2025/135402

(57) **Abstract**

A method of synchronizing audio and video comprises receiving, by a first electronic device, video frame data and audio frame data from a second electronic device through wireless communication; playing, by the first electronic device, video and audio at a first playback speed based on an index of the video frame data being the same as an index of the audio frame data; and playing, by the first electronic device, the audio at a second playback speed faster than the first playback speed while maintaining the playback speed of the video at the first playback speed, based on the index of the video frame data being different from the index of the audio frame data.

## Description

### [Technical Field]

The disclosure relates to a method of synchronizing audio and video and an electronic device for performing the method.

### [Background Art]

With the recent development of video and audio processing technologies, high-quality video and audio contents are being produced in large quantities. Also, with the development of communication technologies, wireless transmission of the high-quality video and audio contents has become possible.

Unlike a case of transmitting content by using wired communication, transmission of content by using wireless communication may frequently cause delays of transmission of the content depending on the condition of the communication network.

### [Disclosure]

### [Technical Problem]

The disclosure provides a method of synchronizing audio and video while content is being transmitted/received through wireless communication and an electronic device for performing the method.

The disclosure provides a method of synchronizing audio and video for preventing audio discontinuity in a situation where video frames are skipped due to poor wireless communication conditions and an electronic device for performing the method.

Technological objectives of the disclosure are not limited to what are mentioned above, and throughout the specification, it will be clearly appreciated by those of ordinary skill in the art that there may be other technological objectives unmentioned.

### [Technical Solution]

According to an embodiment of the disclosure, a method of synchronizing audio and video may include receiving, by a first electronic device, video frame data and audio frame data from a second electronic device through wireless communication; playing, by the first electronic device, video and audio at a first playback speed based on an index of the video frame data being the same as an index of the audio frame data; and playing the audio at a second playback speed faster than the first playback speed while maintaining the playback speed of the video at the first playback speed, based on the index of the video frame data being different from the index of the audio frame data.

According to an embodiment of the disclosure, an electronic device may include a content player; a communication interface connected to a wireless network; a memory storing at least one instruction; and at least one processor connected to the communication interface and the memory, wherein the at least one processor may be configured to execute the at least one instruction to receive video frame data and audio frame data from an external device through the communication interface, control the content player to play video and audio at a first playback speed based on an index of the video frame data being the same as an index of the audio frame data content, and control the content player to play the audio at a second playback speed faster than the first playback speed while maintaining the playback speed of the video at the first playback speed, based on the index of the video frame data being different from the index of the audio frame data.

### [Description of Drawings]

FIG. 1 illustrates a content providing system, according to an embodiment.
FIG. 2 is a block diagram illustrating a configuration of a content providing system, according to an embodiment.
FIG. 3 is a conceptual diagram for describing an example of a configuration of a content providing system in detail, according to an embodiment.
FIG. 4 is a flowchart illustrating a method by which a content providing system provides content, according to an embodiment.
FIG. 5 is a flowchart for describing an example of a data process performed by a second electronic device, according to an embodiment.
FIG. 6 is a conceptual diagram for describing an example of a data process performed by a second electronic device, according to an embodiment.
FIG. 7 conceptually illustrates transmission of video frame data and audio frame data to a first electronic device from a second electronic device, according to an embodiment.
FIG. 8 is a flowchart for describing an example of a data process performed by a first electronic device, according to an embodiment.
FIG. 9 is a conceptual diagram for describing an example of a data process performed by a first electronic device, according to an embodiment.
FIG. 10A conceptually illustrates data stored in a first electronic device when the first electronic device receives video frame data and audio frame data from a second electronic device without communication delays, according to an embodiment.
FIG. 10B conceptually illustrates data stored in a first electronic device when the first electronic device receives video frame data and audio frame data from a second electronic device in a situation where there is a delay in communication, according to an embodiment.
FIG. 11 illustrates a first electronic device outputting video and audio in a situation where there is a delay in communication, according to an embodiment.
FIG. 12 illustrates a first electronic device outputting video and audio after a situation where there is a delay in communication is resolved, according to an embodiment.
FIG. 13 illustrates a user interface for video discontinuity related settings provided by a first electronic device, according to an embodiment.
FIG. 14 illustrates a user interface for setting audio speed provided by a first electronic device, according to an embodiment.

### [Modes of the Invention]

Embodiments and features as described and illustrated in the disclosure are merely examples, and there may be various modifications replacing the embodiments and drawings at the time of filing this application.

The terminology used herein is for the purpose of describing particular embodiments only and is not intended to limit the disclosure.

As used herein, the expression "A or B", "at least one of A and/or B" or "one or more of A and/or B" includes any possible combination of the listed items. For example, "A or B", "at least one of A and B" or "at least one of A or B" may refer to any case of 1) including only A, 2) including only B, or 3) including both A and B.

For example, the singular forms "a", "an" and "the" as herein used are intended to include the plural forms as well, unless the context clearly indicates otherwise.

The terms "comprises" and/or "comprising," when used in this specification, represent the presence of stated features, integers, steps, operations, elements, components or combinations thereof, but do not preclude the presence or addition of one or more other features, integers, steps, operations, elements, components, or combinations thereof.

When an element is mentioned as being "connected to", "coupled to", "supported on" or "contacting" another element, it includes not only a case that the elements are directly connected to, coupled to, supported on or contact each other but also a case that the elements are connected to, coupled to, supported on or contact each other through a third element.

Throughout the specification, when an element is mentioned as being located "on" another element, it implies not only that the element is abut on the other element but also that a third element exists between the two elements.

When it is mentioned that a component (e.g., a first component) is (operatively or communicatively) coupled with/to or connected to another component (e.g., a second component), it should be understood that the first component is coupled to the second component directly or through another component (e.g., a third component).

In the disclosure, the expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware.

In some situations, an expression "a device configured to do something" may refer to "the device able to do something in cooperation with another device or parts". For example, "a processor configured to perform A, B and C functions" may refer to a dedicated processor, e.g., an embedded processor for performing A, B and C functions, or a general purpose processor, e.g., a central processing unit (CPU) or an application processor that may perform A, B and C functions by executing at least one software program stored in a memory.

The term including an ordinal number such as "first", "second", or the like is used to distinguish one component from another and does not restrict the former component.

Furthermore, the terms, such as "~ part", "~ block", "~ member", "~ module", etc., may refer to a unit of handling at least one function or operation. For example, the terms may refer to at least one process handled by hardware such as a field-programmable gate array (9)/application specific integrated circuit (ASIC), etc., software stored in a memory, or at least one processor.

An embodiment of the disclosure will now be described in detail with reference to accompanying drawings. Throughout the drawings, like reference numerals or symbols refer to like parts or components.

A working principle and embodiments of the disclosure will now be described with reference to accompanying drawings.

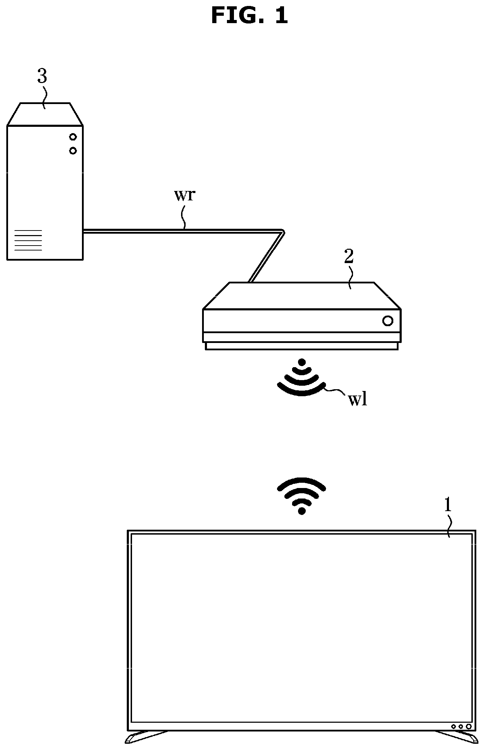

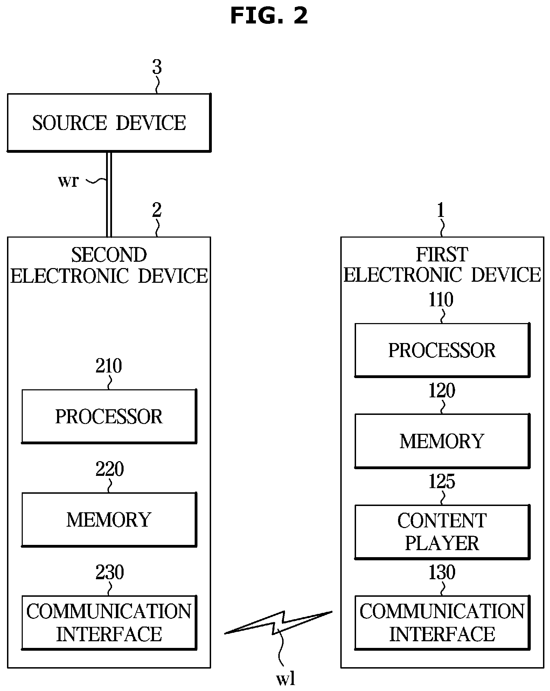

FIG. 1 illustrates a content providing system, according to an embodiment. FIG. 2 is a block diagram illustrating a configuration of a content providing system, according to an embodiment.

Referring to FIGS. 1 and 2, the content providing system may include a first electronic device 1, a second electronic device 2 and a source device 3.

In an embodiment, the source device 3 may provide source content.

The source content may include source video data and source audio data.

The source video data may include source video frame data.

The source audio data may include source audio frame data.

The source device 3 may provide source frame data including source video frame data and source audio frame data.

The source device 3 may include a game console, a personal computer (PC), a set top box (STB), a BD player, a server, etc.

The source device 3 may include a port to be coupled to a connector of the second electronic device 2. The connector may include a high-definition multimedia interface (HDMI), DisplayPort, etc.

The source device 3 may use wired communication wr to transmit content to the second electronic device 2. The content may include content data, and the content data may include video frame data and audio frame data.

The source device 3 transmitting content to the second electronic device 2 may include the source device 3 transmitting source frame data including source video frame data and source audio frame data to the second electronic device 2.

The source device 3 may include at least one processor for controlling operation of the source device 3 and at least one memory for storing a program for controlling the operation of the source device 3.

The second electronic device 2 may provide a real-time video streaming service, and the real-time video streaming service may include a live broadcast service, a cloud game service, a mirroring service, a video communication service, etc.

The second electronic device 2 may be implemented with various computing devices such as a workstation, a cloud, a data drive, a data station, etc.

For example, the second electronic device 2 may be implemented with a set-top box or a one connected box, but is not limited thereto and may be any device having image processing and communication functions.

The second electronic device 2 may perform functions such as managing a user account, registering the first electronic device 1 by connecting the first electronic device to the user account, and managing or controlling the registered first electronic device 1.

For example, the user may access the second electronic device 2 through a user interface provided by the first electronic device 1 to create a user account. The user account may be identified by an identity (ID) and a password created by the user. The second electronic device 2 may register the first electronic device 1 with the user account according to a predetermined procedure. For example, the second electronic device 2 may connect identification information (e.g., a serial number, a media access control (MAC) address, etc.) of the first electronic device 1 to the user account to register, manage and control the first electronic device 1.

The second electronic device 2 registering the first electronic device 1 may include the second electronic device 2 establishing wireless communication w1 with the first electronic device 1.

The second electronic device 2 may include a communication interface 230 for establishing wired communication wr with the source device 3 and establishing wireless communication w1 with the first electronic device 1.

For this, the communication interface 230 may include a wireless communication module and/or a wired communication module.

Schemes for wired communication may include HDMI, DisplayPort, etc. Schemes for wireless communication may include WiBro, Bluetooth (IEEE 802.15.1), Zigbee (IEEE 802.15.4), wireless fidelity access point (Wi-Fi AP), Wi-Fi direct, near field communication (NFC), Z-Wave, etc.

The communication interface 230 may support wireless communication such as bluetooth, AP based Wi-Fi, Zigbee, wireless local area network (LAN), wide area network (WAN), etc. It is not, however, limited thereto, and the communication interface 230 may also support wired communication such as Ethernet, HDMI, universal serial bus (USB), mobile high-definition link (MHL), audio engineering society (AES)/European broadcasting union (EBU), Optical, Coaxial, etc.

The second electronic device 2 may use the wireless communication w1 to transmit content to the first electronic device 1. The content may include content data, and the content data may include video frame data and audio frame data. The content data may correspond to the content data transmitted to the second electronic device 2 from the source device 3.

In an embodiment, the second electronic device 2 may process the content data received from the source device 3. For example, the second electronic device 2 may process source frame data received from the source device 3, and transmit the processed source frame data (hereinafter, 'frame data') to the first electronic device 1.

Specifically, the second electronic device 2 may process the source frame data received from the source device 3 through the wired communication wr, and transmit the frame data to the first electronic device 1 through the wireless communication w1.

The second electronic device 2 may include at least one processor 210 for controlling operation of the second electronic device 2 and at least one memory 220 for storing a program for controlling the operation of the second electronic device 2.

The at least one memory 220 may store data required for various embodiments. The memory 220 may be implemented in the form of a memory embedded in or detachable from the second electronic device 2 depending on the data storage use. For example, data for operating the second electronic device 2 may be stored in the memory embedded in the second electronic device 2 and data for an extended function of the second electronic device 2 may be stored in the memory detachable from the second electronic device 2. In the meantime, the memory embedded in the second electronic device 2 may be implemented with at least one of a volatile memory (e.g., a dynamic random access memory (DRAM), a static RAM (SRAM), or a synchronous dynamic RAM (SDRAM), etc.) or a non-volatile memory (e.g., a one time programmable read only memory (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard drive or a solid state drive (SSD)). The memory detachable from the electronic device 2 may be implemented in such a format as a memory card (e.g., compact flash (CF), secure digital (SD), micro-SD, mini-SD, extreme digital (xD), multi-media card (MMC), etc.) or an external memory (e.g., USB memory) connectable to a USB port.

The at least one processor 210 controls general operation of the second electronic device 2. Specifically, the at least one processor 210 may be connected to the respective components of the second electronic device 2 to control general operation of the second electronic device 2. For example, the at least one processor 210 may be electrically connected to the memory 220 to control general operation of the second electronic device 2. The processor 210 may include one or more processors.

The at least one processor 210 may execute at least one instruction stored in the memory 220 to perform operation of the second electronic device 2 according to various embodiments.

The at least one processor 210 may include one or more of a central processing unit (CPU), a graphics processing unit (GPU), an accelerated processing unit (APU), a many integrated core (MIC), a digital signal processor (DSP), a neural processing unit (NPU), a hardware accelerator or a machine learning accelerator. The at least one processor 210 may control one or any combination of other components of the second electronic device 2, and perform a communication related operation or data processing. The at least one processor 210 may execute at least one program or instruction stored in the memory 220. For example, the at least one processor 210 may execute the at least one instruction stored in the memory 220 to perform a method according to at least one embodiment of the disclosure.

**In** a case that the method according to the at least one embodiment of the disclosure includes a plurality of operations, the plurality of operations may be performed by at least one processor or a plurality of processors. For example, when a first operation, a second operation and a third operation are performed in a method according to at least one embodiment, all the first operation, the second operation and the third operation may be performed by a first processor, or the first operation and the second operation may be performed by the first processor (e.g., a universal processor) and the third operation may be performed by a second processor (e.g., an artificial intelligence (AI) dedicated processor).

The at least one processor 210 may be implemented with a single core processor having a single core, or may be implemented with at least one multicore processor having multiple cores (e.g., homogeneous multi cores or heterogeneous multi cores). When the at least one processor 210 is implemented with the multicore processor, each of the multiple cores included in the multicore processor may include an internal processor memory such as a cache memory or an on-chip memory, and a common cache shared by the multiple cores may be included in the multicore processor. Furthermore, each (or some) of the multiple cores included in the multicore processor may independently read and execute program instructions to implement a method according to at least one embodiment of the disclosure, or all (or some) of the plurality of cores may be involved to read and execute program instructions to implement the method according to the at least one embodiment of the disclosure.

In a case that the method according to the at least one embodiment of the disclosure includes a plurality of operations, the plurality of operations may be performed by one or multiple cores included in the multicore processor. For example, when a first operation, a second operation and a third operation are performed in a method according to at least one embodiment, all the first operation, the second operation and the third operation may be performed by a first core included in the multicore processor, or the first operation and the second operation may be performed by the first core included in the multicore processor and the third operation may be performed by a second core included in the multicore processor.

In embodiments of the disclosure, the processor may refer to a system on chip (SoC) in which at least one processor and other electronic parts are integrated, a single core processor, a multicore processor, or a core included in the single core processor or multicore processor, and the core may be implemented with a CPU, a GPU, an APU, an MIC, a DSP, an NPU, a hardware accelerator or a machine learning accelerator, without being limited thereto. In the following description, for convenience of explanation, the at least one processor 210 will be referred to as the processor 210.

The at least one processor 210 may process source frame data received from the source device 3, and control the communication interface 230 to transmit the frame data to the first electronic device 1.

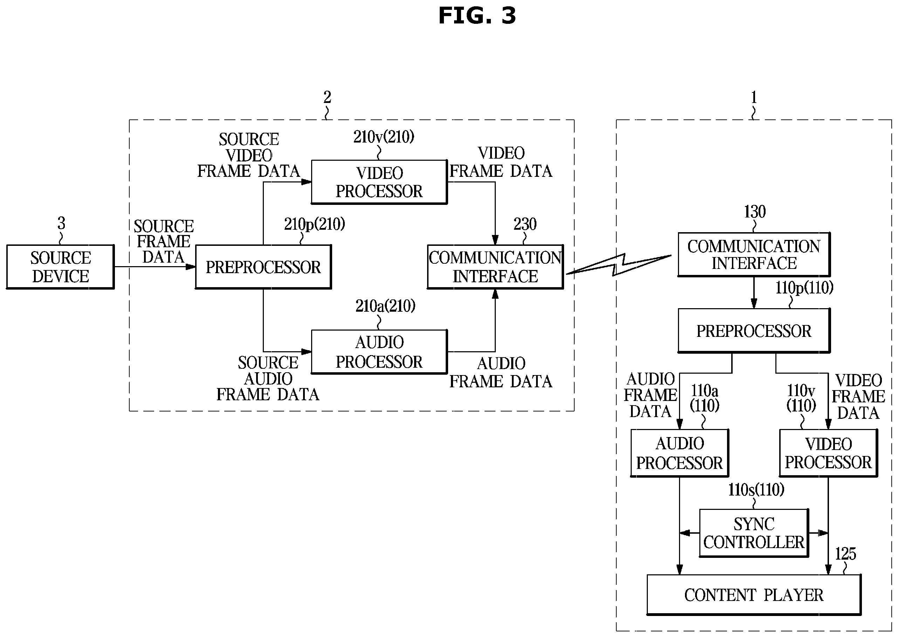

The at least one processor 210 may include a preprocessor 210p (see FIG. 3) for preprocessing the source frame data received from the source device 3, a video processor 210v (see FIG. 3) for processing source video frame data, and an audio processor 210a for processing source audio frame data.

As described above, the preprocessor 210p, the video processor 210v and the audio processor 210a are classified for convenience of explanation of some of the functions of the at least one processor 210, and a function of the preprocessor 210p, a function of the video processor 210v and a function of the audio processor 210a may be performed by a processor having different cores, by one of the multiple cores included in the multicore processor, or by the multiple cores.

The first electronic device 1 may be implemented as a television (TV) as shown in FIG. 1, but is not limited thereto and may be any device having a communication function and a display function, such as a personal computer (PC), a monitor, a smart phone, a tablet PC, a wearable device, a notebook PC, a head mounted display (HMD), a near eye display (NED), a large format display (LFD), a digital signage, a digital information display (DID), a video wall, a projector display, etc.

The first electronic device 1 may include a communication interface 130 for establishing wireless communication w1 with the second electronic device 2.

For this, the communication interface 130 may include a wireless communication module.

For example, the communication interface 130 may support wireless communication such as bluetooth, AP based Wi-Fi, Zigbee, wireless LAN, WAN, etc.

In various embodiments, the communication interface 130 may further include a wired communication module for establishing wired communication with the source device 3.

This may allow the user to select one of connecting the first electronic device 1 to the source device 3 by cable or to the second electronic device 2 wirelessly.

The first electronic device 1 may receive content from the second electronic device 2 through wireless communication w1. The content may include content data, and the content data may include video frame data and audio frame data. The content data may correspond to the content data transmitted to the second electronic data from the source device 3.

As a result, the source device 3 may transmit content data to the second electronic device 2 through wired communication wr; the second electronic device 2 may forward the content data to the first electronic device 1 through wireless communication w1; the first electronic device 1 may play content corresponding to the content data.

As the source device 3 transmits the content data to the second electronic device 2 through wired communication wr, the content data may be transmitted to the second electronic device 2 without communication delays. On the other hand, the second electronic device 2 forwards the content data to the first electronic device 1 through wireless communication w1, so when a network condition for the wireless communication w1 is unstable, the transmitting of the content data may be delayed due to communication delays.

The first electronic device 1 may include at least one processor 110 for controlling operation of the first electronic device 1 and at least one memory 120 for storing a program for controlling the operation of the first electronic device 1.

The at least one memory 120 may store data required for various embodiments. The memory 120 may be implemented in the form of a memory embedded in or detachable from the first electronic device 1 depending on the data storage use. For example, data for operating the first electronic device 1 may be stored in the memory embedded in the first electronic device 1 and data for an extended function of the first electronic device 1 may be stored in the memory detachable from the first electronic device 1. In the meantime, the memory embedded in the first electronic device 1 may be implemented with at least one of a volatile memory (e.g., a DRAM, an SRAM, or an SDRAM, etc.) or a non-volatile memory (e.g., an OTPROM, a PROM, an EPROM, an EEPROM, a mask ROM, a flash ROM, a flash memory (e.g., NAND flash or NOR flash), a hard drive or an SSD). The memory detachable from the electronic device 1 may be implemented in such a format as a memory card (e.g., CF, SD, micro-SD, mini-SD, xD, MMC, etc.) or an external memory (e.g., USB memory) connectable to a USB port.

The at least one processor 110 controls general operation of the first electronic device 1. Specifically, the at least one processor 110 may be connected to the respective components of the first electronic device 1 to control general operation of the first electronic device 1. For example, the at least one processor 110 may be electrically connected to the memory 120 to control general operation of the first electronic device 1. The processor 110 may include one or more processors.

The at least one processor 110 may execute at least one instruction stored in the memory 120 to perform operation of the first electronic device 1 according to various embodiments.

The at least one processor 110 may include one or more of a CPU, a GPU, an APU, an MIC, a DSP, an NPU, a hardware accelerator or a machine learning accelerator. The at least one processor 110 may control one or any combination of other components of the first electronic device 1, and perform a communication related operation or data processing. The at least one processor 110 may execute at least one program or instruction stored in the memory 120. For example, the at least one processor 110 may execute the at least one instruction stored in the memory 120 to perform a method according to at least one embodiment of the disclosure.

In a case that the method according to the at least one embodiment of the disclosure includes a plurality of operations, the plurality of operations may be performed by at least one processor or a plurality of processors. For example, when a first operation, a second operation and a third operation are performed in a method according to at least one embodiment, all the first operation, the second operation and the third operation may be performed by a first processor, or the first operation and the second operation may be performed by the first processor (e.g., a universal processor) and the third operation may be performed by a second processor (e.g., an AI dedicated processor).

The at least one processor 110 may be implemented with a single core processor having a single core, or may be implemented with at least one multicore processor having multiple cores (e.g., homogeneous multi cores or heterogeneous multi cores). When the at least one processor 110 is implemented with the multicore processor, each of the multiple cores included in the multicore processor may include an internal processor memory such as a cache memory or an on-chip memory, and a common cache shared by the multiple cores may be included in the multicore processor. Furthermore, each (or some) of the multiple cores included in the multicore processor may independently read and execute program instructions to implement a method according to at least one embodiment of the disclosure, or all (or some) of the plurality of cores may be involved to read and execute program instructions to implement the method according to the at least one embodiment of the disclosure.

In a case that the method according to the at least one embodiment of the disclosure includes a plurality of operations, the plurality of operations may be performed by one or multiple cores included in the multicore processor. For example, when a first operation, a second operation and a third operation are performed in a method according to at least one embodiment, all the first operation, the second operation and the third operation may be performed by a first core included in the multicore processor, or the first operation and the second operation may be performed by the first core included in the multicore processor and the third operation may be performed by a second core included in the multicore processor.

In embodiments of the disclosure, the processor may refer to an SoC in which at least one processor and other electronic parts are integrated, a single core processor, a multicore processor, or a core included in the single core processor or multicore processor, and the core may be implemented with a CPU, a GPU, an APU, an MIC, a DSP, an NPU, a hardware accelerator or a machine learning accelerator, without being limited thereto. In the following description, for convenience of explanation, the at least one processor 110 will be referred to as the processor 110.

The at least one processor 110 may process content data received from the second electronic device 2, and control a content player to play content.

A content player 125 may include a display and a speaker. The display may play video of the content and the speaker may play audio of the content. Playing the video of the content may include outputting an image of the content. Playing the audio of the content may include outputting a sound of the content.

The at least one processor 110 may control the display of the content player 125 to play video, based on the processing of the video frame data received from the second electronic device 2.

The at least one processor 110 may control the speaker of the content player 125 to play audio, based on the processing of the audio frame data received from the second electronic device 2.

The at least one processor 110 may include a preprocessor 110p (see FIG. 3) for preprocessing frame data received from the second electronic device 2, a video processor 110v (see FIG. 3) for processing video frame data, and an audio processor 110a for processing audio frame data.

In an embodiment, the at least one processor 110 may further include a sync controller 110s (see FIG. 3) for controlling synchronization between video and audio played by the content player 125.

As described above, the preprocessor 110p, the video processor 110v, the audio processor 110a and the sync controller 110s are classified for convenience of explanation of some of the functions of the at least one processor 110, and a function of the preprocessor 110p, a function of the video processor 110v, a function of the audio processor 110a and a function of the sync controller 110s may be performed by the processor having different cores, by one of the multiple cores included in the multicore processor, or by the multiple cores.

FIG. 3 is a conceptual diagram for describing an example of a configuration of a content providing system in detail, according to an embodiment.

Referring to FIG. 3, the source device 3 may transmit source frame data to the second electronic device 2 through wired communication. The source frame data may include source audio frame data and source video frame data.

The preprocessor 210p of the second electronic device 2 may preprocess the source frame data. The preprocessing of the source frame data may include converting the source frame data into a state that is processible by the video processor 210v of the second electronic device 2 and/or converting the source frame data into a state that is processible by the audio processor 210a.

For example, the preprocessing of the source frame data may include dividing the source frame data into source video frame data and source audio frame data.

The video processor 210v of the second electronic device 2 may process the source video frame data. For example, the video processor 210v may encode the source video frame data. For this, the video processor 210v may include a video encoder. The encoding of the source video frame data may include compressing a plurality of source video frames on frame-by-frame basis.

**In** an embodiment, the video processor 210v may assign an index to the source video frame data.

The assigning of the index to the source video frame data may include assigning the index into the header of the source video frame data.

**In** an embodiment, the video processor 210v may assign a different index to different video frame data.

For example, a first index may be assigned to first video frame data corresponding to a first video frame, and a second index may be assigned to second video frame data corresponding to a second video frame consecutive to the first video frame.

Accordingly, a different index may be assigned into a header area of each source video frame data.

The index may include numerical data, but the form of the index is not limited thereto.

When the index includes the numerical data, consecutive numbers may be assigned to consecutive video frames. For example, index '1' may be assigned to the first video frame data corresponding to the first video frame, index '2' may be assigned to the second video frame data corresponding to the second video frame consecutive to the first video frame, and index '3' may be assigned to the third video frame data corresponding to the third video frame consecutive to the second video frame.

In various embodiments, the second electronic device 2 may initialize the index to be assigned to the video frame data and/or the audio frame data based on a preset condition being satisfied.

In another embodiment, the second electronic device 2 may initialize the index to be assigned to the video frame data and/or the audio frame data at preset intervals.

Accordingly, based on an index assigned to video frame data and/or audio frame data exceeding a predetermined value, a newly assigned index may restart from '1'. In other words, the index value for the video frame data and/or the audio frame data may be reset at predetermined intervals without being increased indefinitely.

For convenience of explanation, the source video frame data processed by the video processor 210v will now be referred to as video frame data.

In an embodiment, the video frame data may be stored in the memory 220 and then wirelessly transmitted to the first electronic device 1 through the communication interface 230.

The audio processor 210a of the second electronic device 2 may process the source audio frame data. For example, the audio processor 210a may format the source audio frame data. For this, the audio processor 210a may include an audio formatter.

The formatting of the source audio frame data may include encoding or converting the source audio frame data to fit into a particular format or standard.

In an embodiment, the audio processor 210a may assign an index to the source audio frame data.

The assigning of the index to the source audio frame data may include assigning the index into the header of the source audio frame data.

In an embodiment, the audio processor 210v may assign a different index to audio frame data corresponding to a different video frame.

For example, a first index may be assigned to first audio frame data corresponding to the first video frame, and a second index may be assigned to second audio frame data corresponding to the second video frame consecutive to the first video frame.

In various embodiments, there may be a plurality of audio frames corresponding to one video frame. The audio frames corresponding to the first video frame may include a first audio frame and a second audio frame.

In an embodiment, the audio processor 210a may assign the same index to audio frame data corresponding to the same video frame.

For example, the audio processor 210a may assign the same index to first audio frame data corresponding to the first audio frame and second audio frame data corresponding to the second audio frame.

Accordingly, a different index may be assigned into a header area of each source audio frame data.

The index may include numerical data, but the form of the index is not limited thereto.

When the index includes the numerical data, consecutive numbers may be assigned to consecutive audio frames. For example, index '1' may be assigned to audio frame data corresponding to at least one audio frame corresponding to the first video frame, index '2' may be assigned to audio frame data corresponding to at least one audio frame corresponding to the second video frame consecutive to the first video frame, and index '3' may be assigned to audio frame data corresponding to at least one audio frame corresponding to the third video frame consecutive to the second video frame.

For convenience of explanation, the source audio frame data processed by the audio processor 210a will now be referred to as audio frame data.

In an embodiment, the audio frame data may be stored in the memory 220 and then wirelessly transmitted to the first electronic device 1 through the communication interface 230.

The video frame data and the audio frame data stored in the memory 220 may be transmitted to the first electronic device 1 in real time.

However, when the wireless communication network is in a bad condition, transmitting of the video frame data and the audio frame data to the first electronic device 1 from the second electronic device 2 may be delayed.

Especially, high-quality video frame data has a large volume, so video frame data stored in the memory 220 may be stacked in a situation where communication is delayed.

In a case that a content to be transmitted to the second electronic device 2 from the source device 3 corresponds to content requiring real-time streaming, transmitting of a portion of the video frame data stored in the memory 220 may be skipped, and transmitting of recently stored video frame data may be resumed.

In an embodiment, when there is a delay in communication, the processor 210 may skip transmitting of a portion of the video frame data and resume transmitting of the recently stored video frame data.

On the other hand, as the audio frame data is not bigger in volume than the video frame data, it may be transmitted to the first electronic device 1 from the second electronic device 2 even when there is a delay in communication.

In an embodiment, when there is a delay in communication, the processor 210 may skip transmitting of a portion of the video frame data but maintain transmitting of the audio frame data.

In other words, when there is a delay in communication, the first electronic device 1 may temporarily fail to receive the video frame data but receive only the audio frame data.

As such, the second electronic device 2 may transmit frame data to the first electronic device 1 through wireless communication. The frame data may include audio frame data and/or video frame data.

The communication interface 130 of the first electronic device 1 may receive frame data from the communication interface 230 of the second electronic device 2 by using wireless communication.

The prerocessor 110p of the first electronic device 1 may preprocess the frame data. The preprocessing of the frame data may include converting the frame data into a state that is processible by the video processor 110v of the first electronic device 1 and/or converting the frame data into a state that is processible by the audio processor 110a of the first electronic device 1.

For example, the preprocessing of the frame data may include dividing the frame data into video frame data and audio frame data.

The video processor 110v of the first electronic device 1 may process the video frame data. For example, the video processor 110v may decode the video frame data. For this, the video processor 110v may include a video decoder. The decoding of the video frame data may include decompressing encoded video frame data. The encoded video frame data may include a plurality of video frames.

The decoding of the video frame data may include reading metadata included in the encoded video frame data.

In an embodiment, the video processor 110v may identify an index assigned to the video frame data.

The identifying of the index assigned to the video frame data may include reading a value stored in the header of the video frame data.

As described above, a different index may be assigned into the header of video frame data corresponding to each of the plurality of video frames.

For example, the first video frame data corresponding to the first video frame may be assigned the first index, and the second video frame data corresponding to the second video frame consecutive to the first video frame may be assigned the second index.

In a case that consecutive video frames have not been transmitted due to a delay in communication, index values assigned to the plurality of video frames may be inconsecutive.

In an embodiment, video frame data may be stored in the memory 120, and a video frame corresponding to the video frame data may be output through the content player 125.

The outputting of the video frame corresponding to the video frame data through the content player 125 may include displaying an image corresponding to the video frame data through the display of the content player 125.

The audio processor 110a of the first electronic device 1 may process audio frame data. For example, the audio processor 110a may parse the audio frame data. For this, the audio processor 110a may include an audio parser.

The parsing of the audio frame data may include encoding or converting the audio frame data to fit into a particular format or standard. The parsing of the audio frame data may include reading metadata included in the formatted audio frame data.

**In** an embodiment, the audio processor 110a may identify an index assigned to the audio frame data.

The identifying of the index assigned to the audio frame data may include reading a value stored in the header of the audio frame data.

**In** an embodiment, the audio processor 110a may assign a different index to audio frame data corresponding to a different video frame.

As described above, a different index may be assigned into the header of audio frame data corresponding to each of the plurality of video frames.

For example, at least one audio frame data corresponding to the first video frame may be assigned the first index, and at least one audio frame data corresponding to the second video frame consecutive to the first video frame may be assigned the second index.

Even in a case that consecutive video frames have not been transmitted to the first electronic device 1 from the second electronic device 2 due to delays in communication, audio frames having a relatively small volume may be transmitted to the first electronic device 1 from the second electronic device 2.

**In** other words, even when the consecutive video frames have not been transmitted due to a delay in communication, index values assigned to a plurality of audio frames may be consecutive.

**In** an embodiment, audio frame data may be stored in the memory 120, and audio corresponding to the audio frame data may be output through the content player 125.

The outputting of the audio frame corresponding to the audio frame data through the content player 125 may include outputting a sound corresponding to the audio frame data through the speaker of the content player 125.

The sync controller 110s may compare the index of the video frame data with the index of the audio frame data and, based on a result of the comparing, synchronize video and audio to be played by the content player 125.

**In** an embodiment, the sync controller 110s may control the video playback speed and/or the audio playback speed according to the result of the comparing between the index of the video frame data and the index of the audio frame data.

The content player 125 may play video and audio at a playback speed controlled by the sync controller 110s based on the video frame data and the audio frame data.

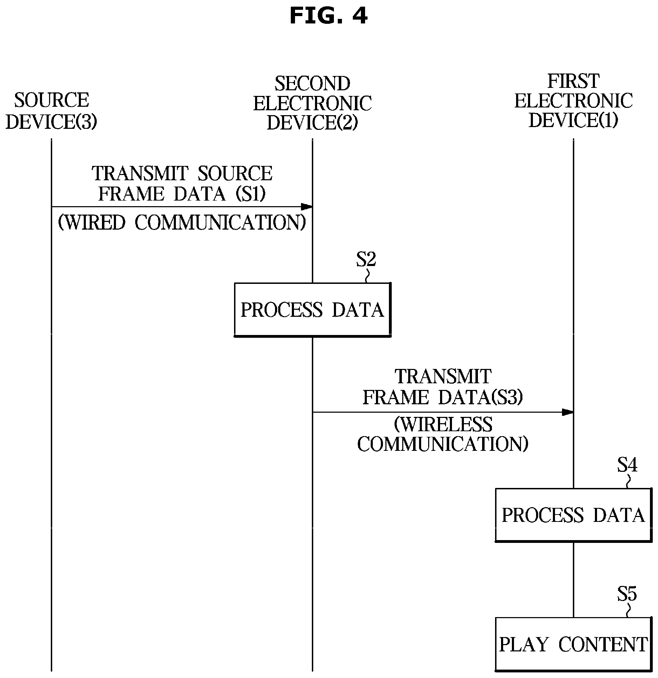

FIG. 4 is a flowchart illustrating a method by which a content providing system provides content, according to an embodiment.

Referring to FIG. 4, the source device 3 may transmit source frame data to the second electronic device 2 through wired communication, in S1.

The second electronic device 2 may process the source frame data, in S2.

The processing of the source frame data in S2 may include encoding source video frame data and assigning an index to the source video frame data.

The processing of the source frame data in S2 may include formatting source audio frame data and assigning an index to the source audio frame data.

The second electronic device 2 may process the source frame data and transmit the processed data (frame data) to the first electronic device 1 through wireless communication, in S3.

The frame data may include video frame data and the audio frame data.

In an embodiment, the second electronic device 2 transmitting the frame data to the first electronic device 1 in S3 may include the second electronic device 2 transmitting the frame data including only the audio frame data when there is a delay in wireless communication.

In other words, the second electronic device 2 may skip transmitting of the video frame data when there is a delay in wireless communication.

**In** an embodiment, the second electronic device 2 transmitting the frame data to the first electronic device 1 in S3 may include the second electronic device 2 transmitting the frame data including both the video frame data and the audio frame data when there is no delay in wireless communication.

The first electronic device 1 may process the frame data received from the second electronic device 2, in S4.

The processing of the frame data in S4 may include comparing the index of the video frame data with the index of the audio frame data.

The first electronic device 1 may play a content based on the video frame data and the audio frame data, in S5.

The playing of the content based on the video frame data and the audio frame data in S5 may include playing the video and audio at a first playback speed based on the index of the video frame data being the same as the index of the audio frame data.

**In** this case, the first playback speed is a default speed, which may be defined as 1x speed.

The playing of the content based on the video frame data and the audio frame data in S5 may include playing the audio at a second playback speed that is faster than the first playback speed while maintaining the video playback speed at the first playback speed based on the index of the video frame data being different from the index of the audio frame data.

The playing of the audio at the second playback speed that is faster than the first playback speed may include downsampling the audio frame data. The downsampling of the audio frame data may include reducing the sampling rate of the audio frame data. In this case, the second playback speed may be set to a speed faster than the first playback speed in advance.

In an embodiment, the second playback speed may be a preset speed (e.g., 1.5x speed).

In an embodiment, the second playback speed may be set by the user.

In an embodiment, the first electronic device 1 may determine the second playback speed based on a difference in index between the video frame data and the audio frame data. In this case, the second playback speed may be variable.

For example, the first electronic device 1 may determine the second playback speed to be faster as the difference in index between the video frame data and the audio frame data increases.

When the difference in index between the video frame data and the audio frame data has a first value, the first electronic device 1 may determine the second playback speed to be a first speed corresponding to the first value, and when the difference in index between the video frame data and the audio frame data has a second value larger than the first value, the first electronic device 1 may determine the second playback speed to be a second speed corresponding to the second value. In this case, the second speed may be faster than the first speed.

In the disclosure, when transmitting of a portion of the video frame data fails due to a delay in communication, audio is played faster while the video is being played, so that the user may appreciate the content without audio loss.

In an embodiment, the playing of the content based on the video frame data and the audio frame data may include playing neither the video nor the audio when the receiving of the video frame data is delayed.

In other words, when the video is not played, the audio may not be played either, and when the playing of the video is resumed, the audio may be played faster than the default speed.

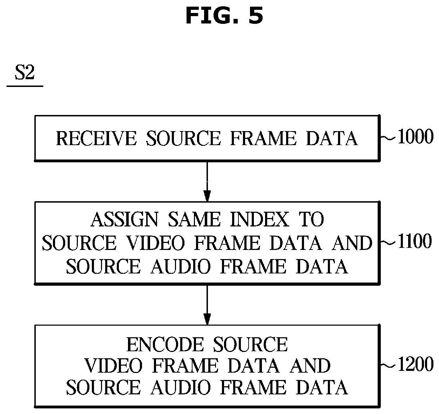

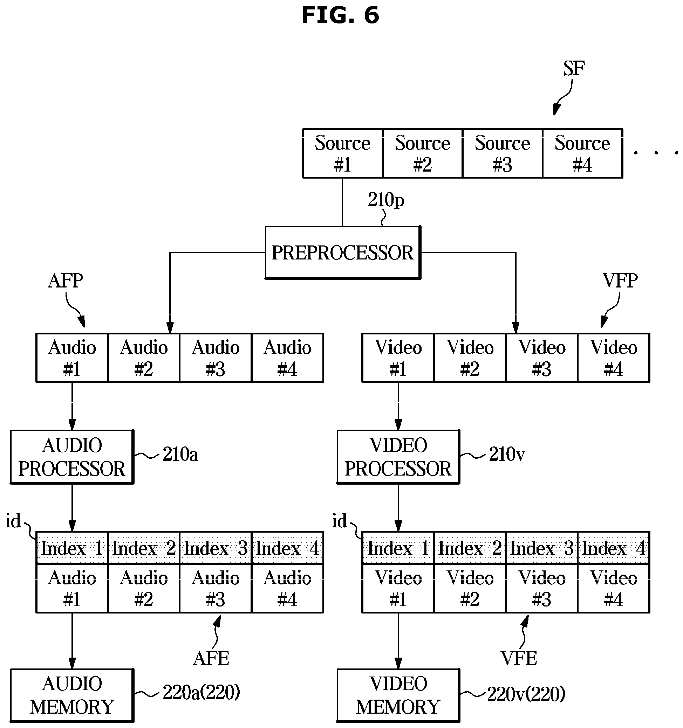

FIG. 5 is a flowchart for describing an example of a data process performed by a second electronic device, according to an embodiment. FIG. 6 is a conceptual diagram for describing an example of a data process performed by a second electronic device, according to an embodiment.

Referring to FIGS. 5 and 6, in S2, the second electronic device 2 may receive source frame data SF from the source device 3, in 1000.

The source frame data SF may include source audio frame data AFP and source video frame data VFP.

For example, the source frame data SF corresponding to source frame 1 (Source #1) may include the source video frame data VFP corresponding to video frame 1 (Video #1) and the source audio frame data AFP corresponding to audio frame 1 (Audio #1).

As such, the source frame data SF corresponding to source frame 2, 3 or 4 (Source #2, Source #3 or Source #4) may include the source video frame data VFP corresponding to video frame 2, 3 or 4 (Video #2, Video #3 or Video #4) and the source audio frame data AFP corresponding to audio frame 2, 3 or 4 (Audio #2, Audio #3 or Audio #4).

In an embodiment, the receiving of the source frame data SF in 1000 may include receiving the first source frame data (Source #1) including the first source video frame data (Video #1) and the first source audio frame data (Audio #1) and consecutively, receiving the second source frame data (Source #2) including the second source video frame data (Video #2) and the second source audio frame data (Audio #2).

As described above, in various embodiments, the source frame data SF corresponding to source frame 1 (Source #1) may include the source video frame data VFP corresponding to video frame 1 (Video #1) and the source audio frame data AFP corresponding to a plurality of audio frames (e.g., Audio #1 and Audio #2).

In an embodiment, the receiving of the source frame data SF in 1000 may include receiving the first source frame data (Source #1) including the first source video frame data (Video #1) and the first source audio frame data (Audio #1) and consecutively, receiving the second source frame data (Source #2) including the second source video frame data (Video #2), the second source audio frame data (Audio #2) and the third source audio frame data (Audio #3).

In the disclosure, for convenience of explanation, it is assumed that the source frame data SF corresponding to source frame n (Source #n, where n is an integer) includes the source video frame data VFP corresponding to video frame n (Video #n) and the source audio frame data AFP corresponding to audio frame n (Audio #n).

The preprocessor 210p may preprocess the source frame data SF, and obtain the source audio frame data AFP and the source video frame data VFP.

The preprocessor 210p may send the source audio frame data AFP to the audio processor 220a, and send the source video frame data VFP to the video processor 220v.

The second electronic device 2 may assign the same index id to the source audio frame data AFP and the source video frame data VFP included in the source frame data SF, in 1100.

The second electronic device 2 may encode the source audio frame data AFP and the source video frame data VFP, in 1200.

In the disclosure, the encoding of the source audio frame data AFP and the source video frame data VFP in 1200 may include assigning the same index id to the source audio frame data AFP and the source video frame data VFP.

In an embodiment, the audio processor 210a may assign the index id to the source audio frame data AFP. In an embodiment, the audio processor 210a may format the source audio frame data AFP.

In an embodiment, the video processor 210v may assign the index id to the source video frame data VFP. In an embodiment, the video processor 210v may encode the source video frame data.

The audio processor 2210a and the video processor 210v may assign the same index id to the source video frame data VFP and source audio frame data AFP corresponding to the same source frame.

In an embodiment, when the second electronic device 2 receives the first source frame data (e.g., Source #1) including the first source video frame data (e.g., Video #1) and the first source audio frame data (e.g., Audio #1) and receives, in succession, the second source frame data (e.g., Source #2) including the second source video frame data (e.g., Video #2) and the second source audio frame data (e.g., Audio #2), the assigning of the same index id to the source video frame data (e.g., VFP) and the source audio frame data (e.g., AFP) corresponding to the same source frame may include assigning a first index (e.g., Index1) to the first source video frame data (e.g., Video #1) and the first source audio frame data (e.g., Audio #1) and assigning a second index (e.g., Index 2) that is different from the first index (e.g., Index 1), to the second source video frame data (e.g., Video #2) and the second source audio frame data (e.g., Audio #2).

For example, the same index id may be assigned to the source video frame data VFP corresponding to video frame n, Video #n, and the source audio frame data AFP corresponding to audio frame n, Audio #n. Furthermore, different indexes id may be assigned to the source video frame data VFP corresponding to video frame n, Video #n, and the source video frame data VFP corresponding to video frame m, Video #m, where m is an integer different from n. Moreover, different indexes id may be assigned to the source audio frame data AFP corresponding to audio frame n, Audio #n, and the source audio frame data AFP corresponding to audio frame m, Audio #m.

In an embodiment, when the second electronic device 2 receives the first source frame data SF including the first source video frame data VFP and the first source audio frame data AFP, and receives, in succession, the second source frame data SF including the second source video frame data VFP, the second source audio frame data AFP and the third source audio frame data AFP, the assigning of the same index id to the source video frame data VFP and the source audio frame data AFP corresponding to the same source frame may include assigning a first index id to the first source video frame data VFP and the first source audio frame data AFP and assigning a second index id that is different from the first index id, to the second source video frame data VFP, the second source audio frame data AFP and the third source audio frame data AFP.

In other words, when one source frame data SF includes a plurality of audio frames, the same index id may be assigned to the source video frame data VFP corresponding to a video frame (e.g., Video #1) and the source audio frame data AFP corresponding to the plurality of audio frames (e.g., Audio #1 and Audio #2). Furthermore, different video frames may be assigned different indexes id. Also, audio frames corresponding to different source frames may be assigned different indexes id.

The audio processor 210a may process the source audio frame data AFP to generate audio frame data AFE assigned an index id.

The audio frame data AFE may be stored in the audio memory 220a.

The audio frame data AFE may be temporarily stored in the audio memory 220a, and may be transmitted to the first electronic device 1 through the communication interface 230.

The video processor 210v may process the source video frame data VFP to generate video frame data VFE assigned an index id.

The video frame data VFE may be temporarily stored in the video memory 220v, and may be transmitted to the first electronic device 1 through the communication interface 230.

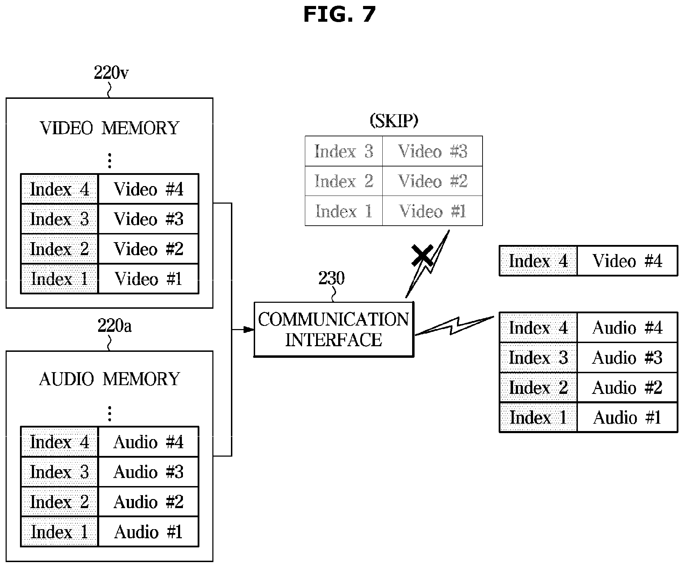

FIG. 7 conceptually illustrates transmission of video frame data and audio frame data to the first electronic device 1 from the second electronic device 2, according to an embodiment.

Referring to FIG. 7, the second electronic device 2 may skip transmission of a portion of the video frame data VFE stored in the video memory 220v when there is a delay in communication.

The second electronic device 2 may control the communication interface to transmit only the recently stored video frame data VFE to ensure real-timeness of the content when the video frame data VFE is getting stored and stacked in the video memory 220v due to the communication delay. In this case, the transmitted video frame data VFE and the other video frame data VFE which is not yet transmitted may be deleted from the video memory 220v.

On the other hand, even when there is a delay in communication, the audio frame data AFE may all be transmitted to the first electronic device 1 through the communication interface 230. In this case, the transmitted audio frame data AFE may be deleted from the audio memory 220a.

For example, in a case that transmission of a portion (e.g., Video #1, Video #2 and Video #3) of the video frame data VFE is skipped, all (e.g., Audio #1, Audio #2, Audio #3 and Audio #4) of the audio frame data AFE and only the recently stored video frame data (VFE) (e.g., Video #4) may be transmitted to the first electronic device 1 through the communication interface 230.

In the disclosure, as the second electronic device 2 skips transmission of the video frame data VFE that has not been transmitted in real time due to a delay in communication, real-timeness of the content provided by the first electronic device 1 may be ensured.

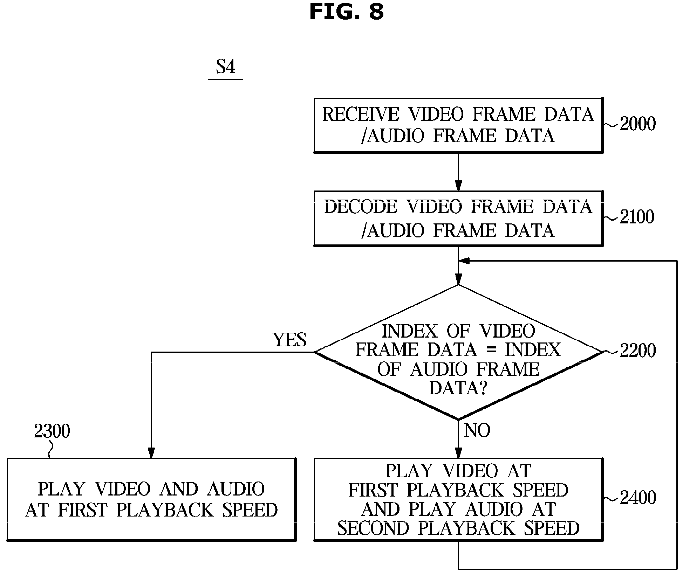

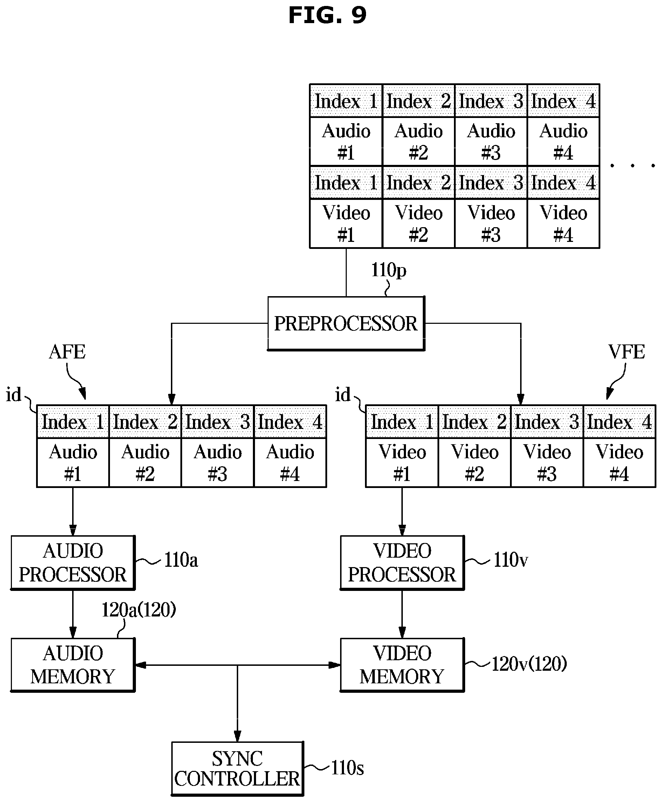

FIG. 8 is a flowchart for describing an example of a data process performed by the first electronic device 1, according to an embodiment. FIG. 9 is a conceptual diagram for describing an example of a data process performed by the first electronic device 1, according to an embodiment.

Referring to FIGS. 8 and 9, in operation S4, the first electronic device 1 may receive frame data including the video frame data VFE and the audio frame data AFE from the second electronic device 2, in 2000.

The video frame data VFE may be assigned the index id on a video frame basis. The audio frame data AFE may be assigned the index id on an audio frame basis. In this case, the video frame data VFE and the audio frame data AFE may be in an encoded state.

The preprocessor 110p may preprocess the frame data. The preprocessor 110p may obtain the video frame data VFE and the audio frame data AFE.

The preprocessor 110p may send the video frame data VFE to the video processor 110v, and send the audio frame data AFE to the audio processor 110a.

The first electronic device 1 may decode the video frame data VFE and the audio frame data AFE, in 2100.

The first electronic device 1 may compare the index id of the video frame data VFE with the index id of the audio frame data AFE, in 2200.

In the disclosure, the decoding of the video frame data VFE and the audio frame data AFE in 2100 may also include comparing the index id of the video frame data VFE with the index id of the audio frame data AFE in 2200.

The audio frame data AFE decoded (or parsed) by the audio processor 110a may be stored in the audio memory 120a. The audio frame data AFE decoded (or parsed) by the audio processor 110a may be temporarily stored in the audio memory 120a and may be deleted when a predetermined condition (e.g., the lapse of a certain time) is met.

The video frame data VFE decoded by the video processor 110v may be stored in the video memory 120v. The video frame data VFE decoded by the video processor 110v may be temporarily stored in the video memory 120v, and may be deleted when a predetermined condition (e.g., the lapse of a certain time) is met.

The at least one processor 110 may control the content player 125 to play audio based on the audio frame data AFE stored in the audio memory 120a.

The at least one processor 110 may control the content player 125 to play video based on the video frame data VFE stored in the video memory 120v.

In an embodiment, the sync controller 110s may control the playback speed of the video and the playback speed of the audio. Specifically, the sync controller 110s may maintain the playback speed of the video at the first playback speed, and play the audio at the first playback speed or the second playback speed depending on a predetermined condition.

Based on the index id of the video frame data VFE being the same as the index id of the audio frame data AFE in 2200, the first electronic device 1 may play the video and audio at the first playback speed in 2300.

The first electronic device 1 may not play both the video and the audio based on interruption of reception of the video frame data VFE.

Specifically, based on only the audio frame data AFE being received among the video frame data VFE and the audio frame data AFE, the second electronic device 2 may pause the video and audio until receiving the video frame data VFE.

The at least one processor 110 may control the content player to stop playing the video and audio based on exhaustion of the video frame data VFE stored in the video memory 120v. The exhaustion of the video frame data VFE stored in the video memory 120v may include the number of video frames included in the video frame data VFE stored in the video memory 120v being less than or equal to a predetermined number.

The first electronic device 1 may compare the index id of the video frame data VFE received based on the reception of the video frame data VFE being resumed with the index id of the audio frame data AFE stored in the audio memory 120a. As the received video frame data VFE may also be stored in the video memory 120v, the first electronic device 1 may compare between the indexes ids of the video frame data VFE stored in the video memory 120v and the audio frame data AFE stored in the audio memory 120a, based on the reception of the video frame data VFE being resumed.

Based on the index id of the video frame data VFE being different from the index id of the audio frame data AFE in 2200, the first electronic device 1 may play the video at the first playback speed and play the audio at the second playback speed in 2400.

After the first electronic device 1 changes the audio playback speed to the second playback speed (after operation 2400), based on the index id of the video frame data VFE being the same as the index id of the audio frame data AFE in 2200, the first electronic device 1 may restore the audio playback speed to the first playback speed in 2300.

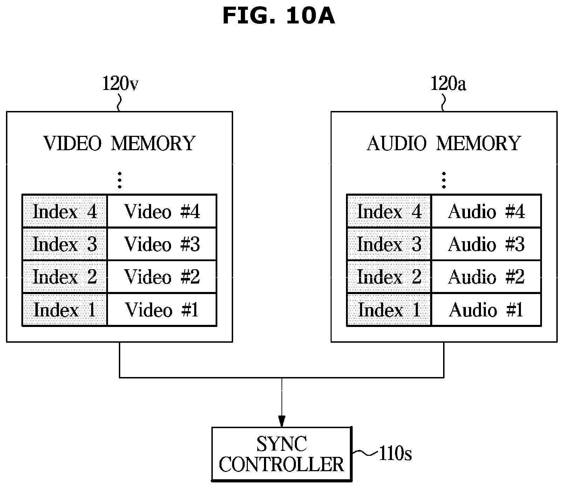

FIG. 10A conceptually illustrates data stored in a first electronic device when the first electronic device receives video frame data and audio frame data from a second electronic device without delays in communication, according to an embodiment.

Referring to FIG. 10A, it may be seen that the index id of the video frame data VFE stored in the video memory 120v corresponds to the index id of the audio frame data AFE stored in the audio memory 120a.

In response to the identifying that the index id of the video frame data VFE stored in the video memory 120v corresponds to the index id of the audio frame data AFE stored in the audio memory 120a, the sync controller 110s may determine that there is no problem synchronizing video and audio.

The sync controller 110s may maintain the video playback speed and the audio playback speed at the first playback speed, based on the index id of the video frame data VFE being the same as the index id of the audio frame data AFE.

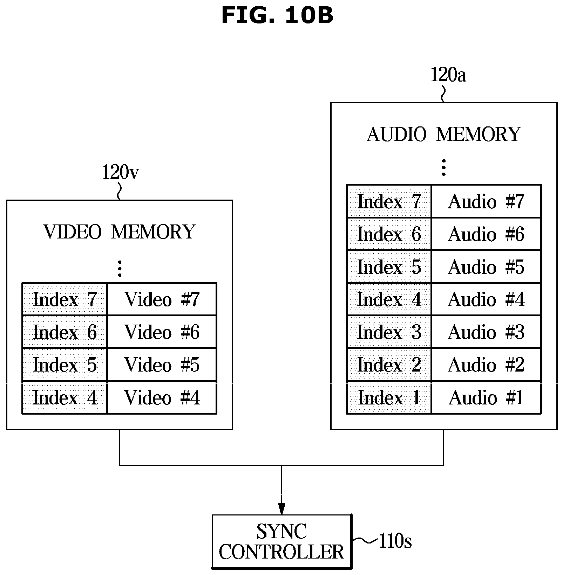

FIG. 10B conceptually illustrates data stored in a first electronic device when the first electronic device receives video frame data VFE and audio frame data AFE from a second electronic device in a situation where there is a delay in communication, according to an embodiment.

Referring to FIG. 10B, it may be seen that the index id of the video frame data VFE stored in the video memory 120v is different from the index id of the audio frame data AFE stored in the audio memory 120a.

The index id of the video frame data VFE stored in the video memory 120v being different from the index id of the audio frame data AFE stored in the audio memory 120a corresponds to a barometer showing that a portion of the video frame data VFE has not been transmitted to the first electronic device 1 from the second electronic device 2 due to communication delays.

In response to the identifying that the index id of the video frame data VFE stored in the video memory 120v is different from the index id of the audio frame data AFE stored in the audio memory 120a, the sync controller 110s may determine that there is a problem synchronizing video and audio.

The sync controller 110s may play the video at the first playback speed but change the audio playback speed to the second playback speed, based on the index id of the video frame data VFE being different from the index id of the audio frame data AFE.

As the audio playback speed gets faster, a point in time where the index id of the video frame data VFE to be played corresponds to the index id of the audio frame data AFE may be expected.

For example, assuming that the second playback speed is twice the first playback speed, two or more audio frames may be played each time one video frame is played. Hence, a point in time where the index id of the video frame data VFE corresponds to the index id of the audio frame data AFE may be reached.

The sync controller 110s may serve the synchronization between video and audio by changing the audio playback speed back to the first playback speed, based on the index id of the video frame data VFE being the same as the index id of the audio frame data AFE.

In the disclosure, to ensure real-timeness of content, all the audio is played even without playing of a portion of the video, so that the user may check the audio in a situation where the content is temporarily interrupted.

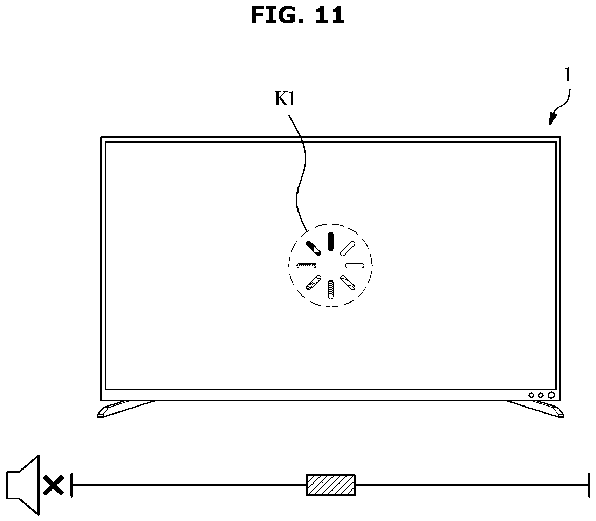

FIG. 11 illustrates a first electronic device outputting video and audio in a situation where there is a delay in communication, according to an embodiment.

The first electronic device 1 may play video and audio based on video frame data and audio frame data received from the second electronic device 2.

As there is a delay in wireless communication between the first electronic device 1 and the second electronic device 2, the second electronic device 2 may transmit only the audio frame data without transmitting the video frame data to the first electronic device 1.

Referring to FIG. 11, the first electronic device 1 may pause the audio and video based on only the audio frame data being received among the video frame data and the audio frame data.

In an embodiment, the first electronic device 1 may output a visual indicator K1 indicating a delay in receiving the video frame data based on only the audio frame data being received among the video frame data and the audio frame data.

The user may check the visual indicator K1 indicating a delay in receiving the video frame data and interruption of audio and determine that the wireless communication is in an abnormal state.

When the situation of delay in wireless communication is resolved, the second electronic device 2 transmits the video frame data to the first electronic device 1, and video frame data that has not been transmitted ends up failing to be sent to the first electronic device 1.

The first electronic device 1 may resume playing video and audio based on receiving of the video frame data from the second electronic device 2 being resumed.

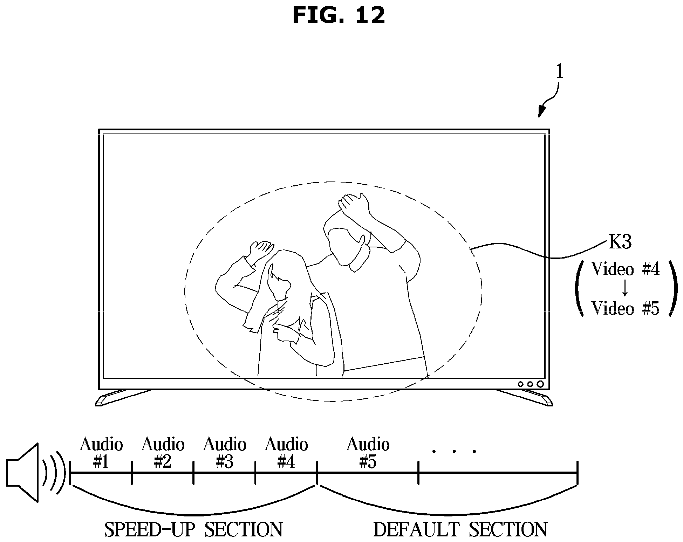

FIG. 12 illustrates a first electronic device outputting video and audio after a situation where there is a delay in communication is resolved, according to an embodiment.

Referring to FIG. 12, the first electronic device 1 may output video corresponding to video frame data when receiving of the video frame data is resumed.

When the receiving of the video frame data is resumed, the index of the video frame data and the index of the audio frame data may be different.

For example, as shown in FIG. 12, the index of the video frame data corresponds to index 4 corresponding to video frame 4 while the index of the audio frame data may correspond to index 1 corresponding to audio frame 1.

The first electronic device 1 may maintain the video playback speed at the first playback speed and control the audio playback speed to be the second playback speed until the index of the video frame data corresponds to the index of the audio frame data.

**In** the example shown in FIG. 12, while an image K3 corresponding to video frame 4 is output at the first playback speed, audio corresponding to audio frames 1 to 4 may be played at the second playback speed.

Assuming that the index of the audio frame data corresponds to the index of the video frame data as the audio is played at the second playback speed, the first electronic device 1 may change the audio playback speed back to the first playback speed.

Consequently, as the playback speeds of video and audio are the same, synchronization between video and audio may be made. Also, audio is played fast in a section where playback of video and audio was paused, so that the user may indirectly estimate content in a video section that is lost due to delays in communication, even without playback of the video.

In the meantime, depending on the user's preference, it may feel uncomfortable when the audio is played fast, or the second playback speed may need to be controlled.

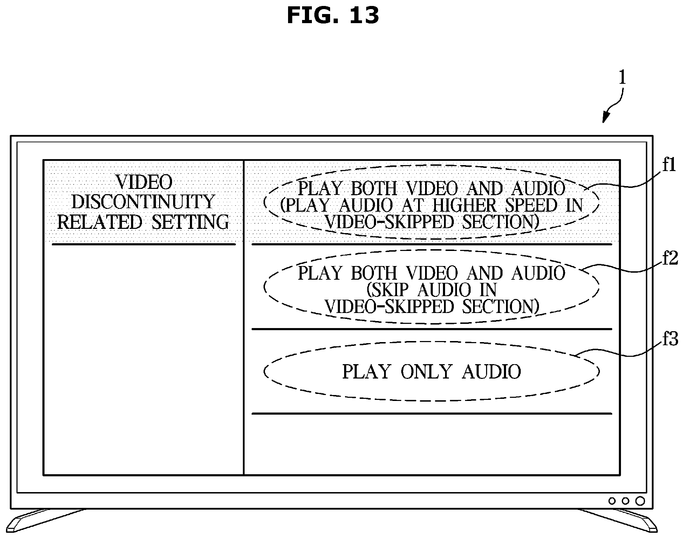

FIG. 13 illustrates a user interface for video discontinuity related settings provided by a first electronic device, according to an embodiment.

Referring to FIG. 13, the first electronic device 1 may provide an interface for setting various functions to be applied in a situation where video is discontinued due to delays in communication.

For example, the first electronic device 1 may provide a first interface element f1 for selecting a function to play both video and audio when the video is discontinued but play audio at a fast speed in a section where video is skipped.

In various embodiments, the first electronic device 1 may perform the aforementioned operations only when the first interface element f1 is selected by the user.

In another example, the first electronic device 1 may provide a second interface element f2 for selecting a function to play both video and audio when the video is discontinued and also skip audio in a section where video is skipped.

In various embodiments, the first electronic device 1 may not perform the aforementioned operations when the second interface element f2 is selected by the user.

In other words, the first electronic device 1 may not perform the operation of changing the audio playback speed to the second playback speed when the second interface element f2 is selected by the user.

In another example, the first electronic device 1 may provide a third interface element f3 for selecting a function to play only audio when the video is discontinued.

In various embodiments, the first electronic device 1 may play audio at the first playback speed while pausing video, based on only audio frame data being received among video frame data and the audio frame data, when the third interface element f3 is selected by the user.

In a case that the first electronic device 1 plays audio at the first playback speed while pausing video, when reception of the video frame data is resumed, the index of the video frame data and the index of the audio frame data may be different from each other.

For example, in the case that the first electronic device 1 plays audio at the first playback speed while pausing video, when reception of the video frame data is resumed, the index of the video frame data may be larger than the index of the audio frame data, or the index value of the audio frame data may be larger than the index of the video frame data.

**In** response to the index value of the video frame data being larger than the index value of the audio frame data, the first electronic device 1 may change the audio playback speed to the second playback speed until the index of the video frame data corresponds to the index of the audio frame data.

On the other hand, in response to the index value of the audio frame data being larger than the index value of the video frame data, the first electronic device 1 may change the video playback speed to the second playback speed or pause audio until the index of the video frame data corresponds to the index of the audio frame data.

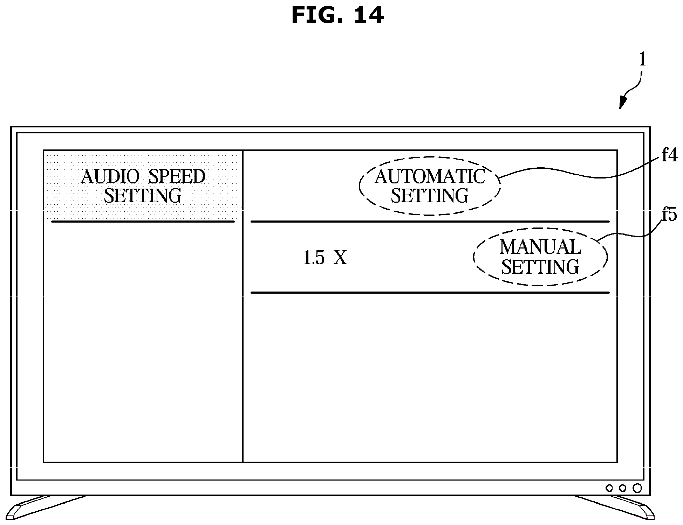

FIG. 14 illustrates a user interface for setting audio speed provided by a first electronic device, according to an embodiment.

Referring to FIG. 14, in various embodiments, the first electronic device 1 may provide interface elements f4 and f5 for setting the second playback speed.

For example, the first electronic device 1 may provide the fourth interface element f4 for selecting the second playback speed by automatic settings.

In various embodiments, when the fourth interface element f4 is selected by the user, the first electronic device 1 may set the second playback speed to a predetermined default value or determine the second playback speed through an operation of determining the second playback speed to be faster the larger the difference in index between the video frame data and the audio frame data.

In another example, the first electronic device 1 may provide the fifth interface element f5 for manually setting the second playback speed.

In various embodiments, the first electronic device 1 may allow the user to set the second playback speed when the fifth interface element f5 is selected by the user. In this case, the user interface provided by the first electronic device 1 may be designed to select the second playback speed to be faster than the default speed, 1x speed. In other words, the user interface provided by the first electronic device 1 may be designed to select the second playback speed not to be slower than the default speed, 1x speed.

A user input corresponding to selecting the interface element e.g., f1, f2, f3, f4 or f5, may be received through an input interface device equipped in the first electronic device 1 or through a remote controller.

According to the disclosure, the user may change settings related to an audio speed-up function according to the user's preference.

According to an embodiment of the disclosure, a method of synchronizing audio and video may include receiving, by the first electronic device 1, video frame data VFE and audio frame data AFE from the second electronic device 2 through wireless communication; playing, by the first electronic device 1, video and audio at a first playback speed based on the index id of the video frame data VFE being the same as the index id of the audio frame data AFE; and playing, by the first electronic device 1, the audio at second playback speed faster than the first playback speed while maintaining playback speed of the video at the first playback speed based on the index id of the video frame data VFE being different from the index id of the audio frame data AFE.

The method of synchronizing audio and video may further include receiving, by the second electronic device 2, source frame data SF including source video frame data VFP and source audio frame data AFP from the source device 3 through wired communication; and assigning, by the second electronic device 2, the same index id to the source video frame data VFP and the source audio frame data AFP included in the source frame data SF and forwarding the source frame data SF to the first electronic device 1 through wireless communication.

The receiving of the source frame data SF may include receiving first source frame data SF including first source video frame data VFP and first source audio frame data AFP, and receiving in succession, second source frame data SF including second source video frame data VFP and second source audio frame data AFP, and the assigning of the same index id to the source video frame data VFP and the source audio frame data AFP included in the source frame data SF may include assigning a first index id to the first source video frame data VFP and the first source audio frame data AFP; and assigning a second index id different from the first index id to the second source video frame data VFP and the second source audio frame data AFP.

The receiving of the source frame data SF may include receiving first source frame data SF including first source video frame data VFP and first source audio frame data AFP, and receiving in succession, second source frame data SF including second source video frame data VFP, second source audio frame data AFP and third source audio frame data AFP, and the assigning of the same index id to the source video frame data VFP and the source audio frame data AFP included in the source frame data SF may include assigning a first index id to the first source video frame data VFP and the first source audio frame data AFP; and assigning a second index id different from the first index id to the second source video frame data VFP, the second source audio frame data AFP and the third source audio frame data AFP.

The playing of the audio at the second playback speed while maintaining the playback speed of the video at the first playback speed may include downsampling the audio frame data AFE

The method of synchronizing audio and video may further include pausing, by the first electronic device 1, the video and audio until receiving the video frame data VFE, based on only the audio frame data AFE being received among the video frame data VFE and the audio frame data AFE.

The method of synchronizing audio and video may further include temporarily storing, by the first electronic device 1, the video frame data VFE and the audio frame data AFE received from the second electronic device 2 in the memory 120.

The method of synchronizing audio and video may further include based on the reception of the video frame data VFE being resumed, comparing, by the first electronic device 1, the index id of the video frame data VFE received with the index id of the audio frame data AFE stored in the memory 120.

The playing of the video and audio at the first playback speed may include restoring the playback speed of the audio to the first playback speed when the index id of the video frame data VFE corresponds to the index id of the audio frame data AFE after the playback speed of the audio is changed to the second playback speed.

The index id of the video frame data VFE may be a value stored by the second electronic device 2 in a header of the video frame data VFE, and the index id of the audio frame data AFE may be a value stored by the second electronic device 2 in a header of the audio frame data AFE.

The method of synchronizing audio and video may further include comparing, by the first electronic device 1, the value stored in the header of the video frame data VFE with the value stored in the header of the audio frame data AFE.

The method of synchronizing audio and video may further include transmitting, by the second electronic device 2, only the audio frame data AFE while skipping transmission of the video frame data VFE due to a delay in wireless communication.

According to an embodiment of the disclosure, the electronic device 1 may include a content player 125; a communication interface 130 connected to a wireless network; a memory 120 storing at least one instruction; and at least one processor 110 coupled to the communication interface 130 and the memory 120, wherein by executing the at least one instruction, the at least one processor 110 is configured to receive video frame data VFE and audio frame data AFE from an external device 2 through the communication interface 130, control the content player 125 to play video and audio at first playback speed based on an index id of the video frame data VFE being the same as an index id of the audio frame data AFE, and play the audio at second playback speed faster than the first playback speed while maintaining playback speed of the video at the first playback speed based on the index id of the video frame data VFE being different from the index id of the audio frame data AFE.

The at least one processor 110 may be configured to, by executing the at least one instruction, play the audio at the second playback speed by downsampling the audio frame data AFE.

The at least one processor 110 may be configured to, by executing the at least one instruction, control the content player 125 to pause the video and audio until receiving the video frame data VFE, based on only the audio frame data AFE being received among the video frame data VFE and the audio frame data AFE.

The at least one processor 110 may be configured to, by executing the at least one instruction, temporarily store the video frame data VFE and the audio frame data AFE received from the external device in the memory 120.

The at least one processor 110 may be configured to, by executing the at least one instruction, based on receiving of the video frame data VFE being resumed, compare the index id of the video frame data VFE received with the index id of the audio frame data AFE stored in the memory 120.

The at least one processor 110 may be configured to, by executing the at least one instruction, control the content player 125 to restore the playback speed of the audio to the first playback speed in response to the index id of the video frame data VFE corresponding to the index id of the audio frame data AFE after the playback speed of the audio is changed to the second playback speed.

The at least one processor 110 may be configured to. by executing the at least one instruction,compare a value stored in a header of the video frame data VFE with a value stored in a header of the audio frame data AFE.

Meanwhile, the embodiments of the disclosure may be implemented in the form of a recording medium for storing instructions to be carried out by a computer. The instructions may be stored in the form of program codes, and when executed by a processor, may generate program modules to perform operations in the embodiments of the disclosure. The recording media may correspond to computer-readable recording media.

The computer-readable recording medium includes any type of recording medium having data stored thereon that may be thereafter read by a computer. For example, it may be a read only memory (ROM), a random access memory (RAM), a magnetic tape, a magnetic disk, a flash memory, an optical data storage device, etc.

The computer-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a recording medium (e.g., a compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a recording medium that may be readable to a device such as a server of the manufacturer, a server of the application store, or a relay server.

The embodiments of the disclosure have thus far been described with reference to accompanying drawings. It will be obvious to those of ordinary skill in the art that the disclosure may be practiced in other forms than the embodiments of the disclosure as described above without changing the technical idea or essential features of the disclosure. The above embodiments of the disclosure are only by way of example, and should not be construed in a limited sense.

## Claims

1. A method of synchronizing audio and video, the method comprising:
receiving, by a first electronic device, video frame data and audio frame data from a second electronic device through wireless communication;
playing, by the first electronic device, video and audio at a first playback speed based on an index of the video frame data being the same as an index of the audio frame data; and
playing, by the first electronic device, the audio at a second playback speed faster than the first playback speed while maintaining the playback speed of the video at the first playback speed, based on the index of the video frame data being different from the index of the audio frame data.

2. The method of claim 1, further comprising:
receiving, by the second electronic device, source frame data including source video frame data and source audio frame data from a source device through wired communication; and
assigning, by the second electronic device, the same index to the source video frame data and the source audio frame data included in the source frame data and forwarding the source frame data to the first electronic device through wireless communication.

3. The method of claim 2, wherein the receiving of the source frame data comprises receiving first source frame data including first source video frame data and first source audio frame data, and receiving in succession, second source frame data including second source video frame data and second source audio frame data, and
wherein the assigning of the same index to the source video frame data and the source audio frame data included in the source frame data comprises
assigning a first index to the first source video frame data and the first source audio frame data; and
assigning a second index different from the first index to the second source video frame data and the second source audio frame data.

4. The method of claim 2, wherein the receiving of the source frame data comprises receiving first source frame data including first source video frame data and first source audio frame data, and receiving in succession, second source frame data including second source video frame data, second source audio frame data and third source audio frame data, and
wherein the assigning of the same index to the source video frame data and the source audio frame data included in the source frame data comprises
assigning a first index to the first source video frame data and the first source audio frame data; and
assigning a second index different from the first index to the second source video frame data, the second source audio frame data and the third source audio frame.

5. The method of claim 1, wherein the playing of the audio at the second playback speed while maintaining the playback speed of the video at the first playback speed comprises downsampling the audio frame data.

6. The method of claim 1, further comprising:
pausing, by the first electronic device, the video and audio until receiving the video frame data, based on only the audio frame data being received among the video frame data and the audio frame data.

7. The method of claim 6, further comprising:
temporarily storing, by the first electronic device, the video frame data and the audio frame data received from the second electronic device in a memory.

8. The method of claim 7, further comprising:
based on receiving of the video frame data being resumed, comparing, by the first electronic device, the index of the video frame data received with the index of the audio frame data stored in the memory.

9. The method of claim 1, wherein the playing of the video and audio at the first playback speed comprises restoring the playback speed of the audio to the first playback speed based on the index of the video frame data corresponding to the index of the audio frame data after the playback speed of the audio is changed to the second playback speed.

10. The method of claim 1, wherein the index of the video frame data is a value stored by the second electronic device in a header of the video frame data, and
wherein the index of the audio frame data is a value stored by the second electronic device in a header of the audio frame data.

11. The method of claim 10, further comprising:
comparing, by the first electronic device, the value stored in the header of the video frame data with the value stored in the header of the audio frame data.

12. The method of claim 1, further comprising:
transmitting, by the second electronic device, only the audio frame data while omitting transmission of the video frame data due to a delay in the wireless communication.

13. An electronic device comprising:
a content player;
a communication interface connected to a wireless network;
a memory storing at least one instruction; and
at least one processor coupled to the communication interface and the memory,
wherein by executing the at least one instruction, the at least one processor is configured to:
receive video frame data and audio frame data from an external device through the communication interface,
control the content player to play video and audio at a first playback speed based on an index of the video frame data being the same as an index of the audio frame data content, and
control the content player to play the audio at a second playback speed faster than the first playback speed while maintaining the playback speed of the video at the first playback speed based on the index of the video frame data being different from the index of the audio frame data.

14. The electronic device of claim 13, wherein by executing the at least one instruction, the at least one processor is configured to play the audio at the second playback speed by downsampling the audio frame data.

15. The electronic device of claim 13, wherein by executing the at least one instruction, the at least one processor is configured to control the content player to pause the video and audio until receiving the video frame data, based on only the audio frame data being received among the video frame data and the audio frame data.
